# FASCICULE DE BREVET EUROPEEN

(11) **EP 3 131 389 B1**
(45) Date de publication et mention de la délivrance du brevet: **11.03.2020**
(21) Numéro de dépôt: 15725741.1
(22) Date de dépôt: 15.04.2015
(51) Int. Cl.: A01K 61/00

(54) **PROCEDE D'OSTREICULTURE AMELIORE**
VERBESSERTES VERFAHREN FÜR AUSTERNZUCHT
IMPROVED OYSTER FARMING METHOD

(30) Priorité: 18.04.2014 FR 1453555
(43) Date de publication de la demande: 22.02.2017
(73) Titulaire: Medithau, 34340 Marseillan (FR)
(72) Inventeur: TARBOURIECH, Florent, 34200 Sete (FR); THIBAUT, Jean-Jacques, 34280 Carnon (FR)
(74) Mandataire: Cabinet Netter
(86) Numéro de dépôt international: PCT/FR2015/051024
(87) Numéro de publication internationale: WO 2015/159025

(56) Documents cités:
- WO-A1-2011/123895
- AU-A4- 2004 100 617
- FR-A1- 2 963 539
- RODRIGUEZ JORGE ET AL: "Tropical mangrove oyster production from hatchery-raised seed in Cuba", JOURNAL OF SHELLFISH RESEARCH, NATIONAL SHELLFISHERIES ASSOCIATION, US, vol. 11, no. 2, 1 janvier 1992 (1992-01-01), pages 455-460, XP008174029, ISSN: 0730-8000

## Description

L'invention concerne le domaine de l'ostréiculture.

La culture des huîtres est un domaine traditionnel et complexe qui a peu évolué au fil du temps. D'une manière générale, les huîtres sont élevées dans des poches immergées en milieu naturel. Selon les lieux de culture, les huîtres peuvent subir des exondations dues aux cycles des marées, ces exondations ont un impact négatif sur la vitesse de croissance des animaux. De plus, en fonction de la localisation des sites d'élevage, les huîtres ne sont pas totalement découvertes à marée basse, elles ne subissent donc pas l'effet ou l'impact d'une exondation totale.

Certaines techniques prévoient une exondation plus ou moins régulière de quelques minutes en vue d'éliminer les épibiontes. D'autres techniques prévoient un nombre limité d'exondations (moins de dix) en fin d'élevage, afin d'habituer les huîtres à la vie sur étal. Hors ces applications particulières, l'exondation est perçue comme une gêne, qui ralentit la croissance des huîtres. Le document "Tropical mangrove oyster production from hatchery-raised seed in Cuba" (Journal of shellfish research, vol.11, no.2, 1992-01-01, pages 455-460) divulgue un procédé d'ostréiculture suivant le préambule de la revendication 1. Un autre procédé d'ostréiculture est connu du document AU 2004 100 617 A4.

La Demanderesse a effectué des recherches poussées pour développer une ostréiculture moins dépendante de paramètres incontrôlables comme le vent, la houle, le cycle des marées et autres paramètres climatiques, et dont la production est plus qualitative et plus régulière en termes de qualité. Elle a ainsi découvert que, contrairement aux préjugés établis, une exondation régulière et maîtrisée permet d'améliorer la qualité des huîtres.

À cet effet, l'invention propose un procédé d'ostréiculture suivant la revendication 1, ledit procédé comprenant au moins une étape d'élevage comprenant une alternance de périodes d'immersion et de périodes d'exondation mécanique d'huîtres, dans lequel les périodes d'exondation mécanique présentent une durée comprise entre 3 heures et 48 heures et la durée d'une période d'immersion entre deux périodes d'exondation mécanique est comprise entre 3 heures et sept jours.

Ce procédé est avantageux car il permet aux huîtres de développer un taux de remplissage supérieur, un muscle adducteur plus important, une épaisseur de nacre plus importante, et une coquille plus épaisse, du fait des cycles d'exondation mécanique. Selon des variantes de l'invention, le dispositif pourra présenter les caractéristiques suivantes :
- la durée des périodes d'exondation mécanique est comprise entre 12 heures et 24 heures,
- la durée d'une période d'immersion entre deux périodes d'exondation mécanique est comprise entre un jour et sept jours,
- l'étape d'élevage comprend une succession de sous-étapes, s'étalant sur une durée totale comprise entre environ dix mois et quarante-huit mois, dans chacune desquelles la durée d'une période d'immersion entre deux périodes d'exondation mécanique est adaptée au climat du lieu de culture,
- le climat du lieu de culture est un climat méditerranéen, et la durée d'une période d'immersion entre deux périodes d'exondation mécanique de chaque sous-étape est choisie comme suit:
   a. pour une première sous-étape, entre quatre jours et sept jours, puis
   b. pour une deuxième sous-étape, entre trois jours et cinq jours, puis
   c. pour une troisième sous-étape, entre un jour et trois jours, puis
   d. pour une quatrième sous-étape, entre trois jours et quatre jours,
- les sous-étapes sont répétées dans le même ordre,
- l'étape d'élevage est réalisée pendant une durée totale comprise entre dix mois et dix-huit mois,
- la durée d'une période d'immersion entre deux périodes d'exondation mécanique est prolongée lorsque l'une ou plusieurs des conditions suivantes est remplie :
   - temps de pluie et/ou de tempête,
   - vent supérieur à 30 nœuds,
   - ensoleillement inférieur à 20%.
- une étape d'affinage est réalisée après l'étape d'élevage, dans laquelle des périodes d'immersion sont réalisées de sorte que les huîtres soient situées à une profondeur comprise entre 10cm et 30cm par rapport à la surface.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma général d'un procédé d'ostréiculture selon l'invention, et
- la figure 2 représente un exemple de réalisation d'une étape du procédé de la figure 1. Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

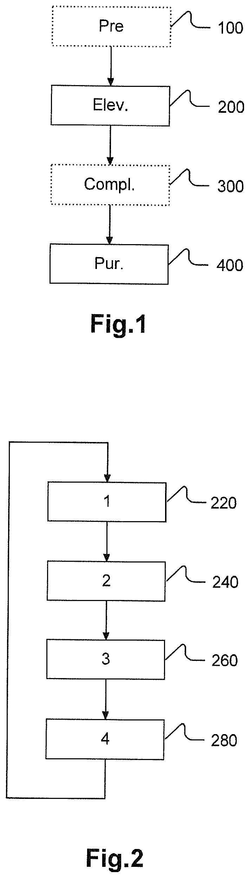

La figure 1 représente un schéma général d'un procédé d'ostréiculture selon l'invention. Ce procédé comprend quatre étapes dont deux sont optionnelles et représentées en traits tiretés.

Dans une première étape 100, des naissains diploïdes ou triploïdes sont reçus et font l'objet d'un pré-grossissement. À ce stade, les huîtres ont une taille comprise entre environ 4mm et 8mm. La durée de l'étape 100 est comprise entre quatre et douze mois.

Ce pré-grossissement peut être réalisé par exemple par élevage en suspension en milieu naturel, par exemple sur structures émergées construites selon le brevet FR1003249, ou sur tout autre type de structure standard, sur un support d'élevage de type lanterne japonaise, panier australien, poche plastique de maille 2mm à 8mm, ou « Pearl Net » (cordée de poches pyramidales en filet disposées en chapelet sur 2,5m de hauteur et lestée par une masse en partie basse). De manière préférée, les périodes d'immersion sont réalisées de sorte que les huîtres soient situées à une profondeur comprise entre 10cm et 30cm par rapport à la surface. Cela permet d'obtenir un effet de « roulage à la vague » grâce auquel les vagues font se frotter entre elles les huîtres, ce qui polit leur surface. Dans ces variantes, il est typique d'avoir une densité d'environ 400 à 500 mollusques par poche.

Au cours de cette étape de pré-grossissement, il est prévu une alternance de période d'immersion et de périodes d'exondation mécanique. Par exondation mécanique, on entend toute méthode technique, par opposition à l'exondation naturelle, par laquelle les huîtres sont sorties de l'eau et maintenues à l'air. Dans l'exemple décrit ici, les périodes d'exondation mécaniques sont réalisées une fois par semaine, pour une durée comprise entre 15 heures et 24 heures. Cette alternance de périodes d'immersion et de périodes d'exondation mécanique est réalisée pendant une durée totale comprise entre quatre mois et douze mois.

Dans une deuxième étape 200, les mollusques pré-grossis à l'étape 100, ou âgés de six mois à dix-huit mois lorsque l'étape 100 est omise suivant un procédé exemplaire hors de la portée de la revendication 1, font l'objet d'un élevage spécifique. À ce stade, les huîtres ont une taille comprise entre environ 15mm et 80mm. L'élevage est réalisé en suspension en milieu naturel sur structures émergées construites selon le brevet FR1003249, ou sur tout autre type de structure standard, sur un support d'élevage comprenant une barre en bois de section carrée dont les dimensions sont 2450x40mm. En variante le support d'élevage peut être une bande PVC de dimensions 2700x80mm, un filet en polypropylène de 15cm de large de 2,5m de hauteur, ou encore un cordage de 3 à 5 mm diamètre. Dans tous les cas, les huîtres sont collées une à une, sur le support. Le collage permet de maîtriser la densité d'élevage, ce qui permet de mieux contrôler l'indice de forme et de mieux maîtriser les risques de propagation des maladies. Les dimensions de ces éléments et la méthode de fixation sur le support pourront varier en fonction du site d'élevage. Enfin, chaque support est lesté par une masse en partie basse. En variante, l'élevage peut être réalisé avec des moyens décrits plus haut à l'étape 100.

Dans l'étape 200, les périodes d'exondation mécaniques présentent chacune une durée comprise entre 3 heures et 48 heures, et de manière préférée entre 12 heures et 24 heures. De plus, la durée d'une période d'immersion entre deux périodes d'exondation mécanique est comprise entre 3 heures et sept jours, et de manière préférée entre deux jours et sept jours. La durée totale de l'étape d'élevage est généralement comprise entre dix mois et quarante-huit mois. Toutes les durées présentées dans ce paragraphe pourront être adaptées en fonction du cycle d'élevage, du lieu d'élevage, du climat de ce lieu et de la saisonnalité.

La figure 2 représente un exemple de réalisation de l'étape 200 dans le cadre d'un climat méditerranéen, pour l'élevage d'huîtres dans le bassin de Thau.

Dans cet exemple de réalisation, l'élevage est une répétition de sous-étapes successives sur une durée totale de dix à dix-huit mois, dans le cadre de l'élevage d'huîtres d'une première gamme.

La boucle de l'étape d'élevage comprend quatre sous-étapes :
- dans une première sous-étape 220, les périodes d'exondation mécaniques présentent une durée comprise entre 12 heures et 24 heures, la durée d'une période d'immersion entre deux périodes d'exondation mécanique est comprise entre quatre jours et sept jours, et la durée totale de cette sous-étape est d'environ trois mois, typiquement de l'hiver jusqu'au printemps,
- dans une deuxième sous-étape 240, les périodes d'exondation mécaniques présentent une durée comprise entre 12 heures et 24 heures, la durée d'une période d'immersion entre deux périodes d'exondation mécanique est comprise entre trois jours et cinq jours, et la durée totale de cette sous-étape est d'environ trois mois, typiquement du printemps jusqu'à l'été,
- dans une troisième sous-étape 260, les périodes d'exondation mécaniques présentent une durée comprise entre 6 heures et 12 heures, la durée d'une période d'immersion entre deux périodes d'exondation mécanique est comprise entre un jour et trois jours, et la durée totale de cette sous-étape est d'environ trois mois, typiquement de l'été jusqu'à l'automne,
- dans une quatrième sous-étape 280, les périodes d'exondation mécaniques présentent une durée comprise entre 12 heures et 24 heures, la durée d'une période d'immersion entre deux périodes d'exondation mécanique est comprise entre trois jours et quatre jours, et la durée totale de cette sous-étape est d'environ trois mois, typiquement de l'automne jusqu'à hiver.

Lorsque la quatrième sous-étape 280 se termine, la boucle reprend avec la sous-étape 220, jusqu'à ce que l'étape d'élevage soit terminée.

En variante, la période d'immersion peut être prolongée lorsque les conditions climatiques ne sont pas favorables. Ainsi, une période d'exondation mécanique peut être repoussée jusqu'à ce que des conditions climatiques favorables soient réunies. Les conditions prolongeant l'immersion peuvent comprendre une ou plusieurs des conditions suivantes :
- pluie et/ou tempête (afin d'éviter l'exposition des huîtres à de l'eau douce),
- vent supérieur à 30 nœuds (afin d'éviter que les huîtres s'abîment entre elles par chocs dus au vent),
- ensoleillement inférieur à 20% (pour permettre une exondation mécanique basée sur de l'énergie solaire, et permettre un impact du rayonnement solaire sur la calcification de la coquille).

De même, lorsque l'une ou plusieurs des conditions ci-dessus se produisent au cours d'une période d'exondation mécanique, cette dernière est écourtée, et la sous-étape se prolonge à l'identique, comme si la période d'exondation mécanique avait été réalisée en entier.

Lorsqu'une ou plusieurs périodes d'exondation sont repoussées du fait de l'une des causes ci-dessus, la durée totale de chaque sous-étape reste inchangée. Il y a donc un nombre d'exondations mécaniques moins important, qui pourra être compensé par exemple en répétant une sous-étape, ou ne pas être compensé.

L'exemple de la figure 2 peut être utilisé dans le cadre de l'élevage d'huîtres d'une deuxième gamme. Dans ce cas, la durée totale de l'étape d'élevage 200 est comprise entre dix-huit et quarante-huit mois.

Lorsque l'exondation mécanique n'est pas basée sur de l'énergie solaire, l'étape d'élevage 200 peut comprendre trois sous-étapes au lieu des quatre présentées ici :
- une première sous-étape, les périodes d'exondation mécaniques présentent une durée comprise entre 12 heures et 24 heures, la durée d'une période d'immersion entre deux périodes d'exondation mécanique est comprise entre trois jours et cinq jours, et la durée totale de cette sous-étape est d'environ six mois, typiquement de l'hiver jusqu'à l'été,
- dans une deuxième sous-étape, les périodes d'exondation mécaniques présentent une durée comprise entre 6 heures et 12 heures, la durée d'une période d'immersion entre deux périodes d'exondation mécanique est comprise entre un jour et trois jours, et la durée totale de cette sous-étape est d'environ trois mois, typiquement de l'été jusqu'à l'automne,
- dans une troisième sous-étape, identique à la première sous-étape, typiquement de l'automne jusqu'à hiver.

Une fois l'étape d'élevage 200 terminée, une troisième étape 300 d'affinage, également appelée complément d'élevage peut être réalisée.

L'étape d'affinage 300 est par exemple réalisée dans le cadre de la culture des huîtres de la première gamme. À ce stade, les huîtres sont adultes et présentent dans cette gamme un poids compris entre 45g et 85g.

L'étape d'affinage 300 comprend une alternance de période d'immersion et de périodes d'exondation mécanique. Ici, l'immersion est réalisée en suspension en milieu naturel.

La spécificité de cette étape est double :
- d'une part les périodes d'immersion sont réalisées de sorte que les huîtres soient situées à une profondeur comprise entre 10cm et 30cm par rapport à la surface. Cela permet d'obtenir un effet de « roulage à la vague » grâce auquel les vagues font se frotter entre elles les huîtres, ce qui polit leur surface;
- d'autre part, la durée des périodes d'exondation mécanique est comprise entre 12 heures et 24 heures, et la durée d'une période d'immersion entre deux périodes d'exondation mécanique est comprise entre trois et sept jours.

La durée totale de l'étape d'affinage 300 est comprise entre sept jours et quatre mois, en fonction des conditions climatiques (selon qu'il y a plus ou moins de vagues induisant un roulage à la vague plus ou moins efficace en milieu naturel).

En variante, l'étape d'affinage 300 peut être réalisée avec des huîtres de la deuxième gamme. Dans encore une autre variante, l'étape d'affinage 300 est réalisée sans exondation mécanique.

Enfin, le procédé se termine avec une quatrième étape 400 de purification. Dans l'exemple décrit ici, cette étape est réalisée dans un centre de purification agréé. Les huîtres adultes pèsent à ce stade entre 45g et 85g pour les huîtres de la première gamme, et entre 90g et 400g pour les huîtres de la deuxième gamme. La purification est réalisée par immersion en bassin de purification, pour une durée comprise entre un jour et cinq jours selon la qualité biotique.

Dans ce qui précède, deux exemples particuliers ont été décrits, en rapport avec deux gammes d'huîtres, élevées sous le climat méditerranéen de l'étang de Thau, situé dans le sud de la France. D'autres variantes adaptées aux diverses conditions apparaîtront à l'homme du métier dans la portée des revendications ci-après.

L'alternance entre périodes d'immersion et périodes d'exondation mécanique joue un rôle particulièrement important, et permet d'obtenir des huîtres dont la nacre est plus épaisse et présente des caractéristiques de couleur spécifiques. L'épaisseur de la nacre permet notamment de protéger l'huître contre la formation de poches de bio-organismes. D'une manière générale, la Demanderesse a découvert que les cycles d'exondation mécanique contrôlés permettent de rendre les huîtres à la fois plus belles et plus résistantes.

En outre, le procédé décrit ici permet d'obtenir des taux IQ (rapport entre la masse de chair et le poids total) et IR (rapport entre la masse de chair et le poids de la coquille) jamais atteints précédemment. À titre de comparaison, une huître de Bouzigues, élevée sur un site comparable à celui des huîtres de la première gamme, présente en moyenne un taux IQ de 7,0% et un taux IR de 15,3%, contre respectivement un taux IQ de 10,1% et IR de 24,3% pour une huître produite selon le procédé décrit ici. Avec les huîtres de la deuxième gamme, la différence est encore plus importante : le taux IQ est de 13,5% et le taux IR de 39%.

Le tableau 1 ci-dessous résume certaines caractéristiques d'huîtres produites sur divers sites en comparaison avec celles d'huîtres produites selon le procédé décrit ici.

**Tableau 1**

| Caractéristique | Deuxième gamme | Première gamme | Normandie (origine) | Gilardeau (marque déposée) | Bouzigues (origine) |
|---|---|---|---|---|---|
| IQ | 13,5% | 10,1% | 9,3% | 12,7% | 7,0% |
| IR | 39% | 24,3% | 30,4% | 39,2% | 15,3% |
| Masse muscle / Masse totale | 2,7% | 0,6% | Indisp. | 1,3% | 0,6% |
| Masse muscle / Masse chair | 19,9% | 5,7% | Indisp. | 10,2% | 8,1% |
| Epaisseur coquille | +++ | +++ | + | ++ | ++ |

| Polie | oui | oui | non | non | non |
|---|---|---|---|---|---|
| Coquille interne | • Nacre terminée et irisée | • Nacre terminée et irisée | • Nacre non terminée | • Nacre terminée et irisée, mais de manière irrégulière selon les huîtres | • Nacre non terminée |
| | • Le couteau ne peut pas être planté | • Le couteau ne peut pas être planté | • Le couteau peut être planté | | • Le couteau peut être planté |
| | | | • Poches, vers ou autres parfois | | |
| | • Pas de poche ou de vers | • Pas de poche ou de vers | • Possibilité de vase | • Possibil ité de vase | • Poches, vers parfois |

Comme cela apparaît dans le Tableau 1, les huîtres de la deuxième gamme présentent des qualités similaires à celles des huîtres Gilardeau (marque déposée), mais avec un rapport Masse muscle / Masse chair bien plus élevé de 19,9% contre 10,2%, ce qui rend les huîtres plus résistantes et leur confère un meilleur goût. En outre, les huîtres issues du procédé décrit ici sont toutes polies, ce qui les rend moins dangereuses à manipuler. De même, les huîtres de la première gamme présentent des qualités remarquables compte tenu de leur court cycle d'élevage.

Il ressort de ce qui précède que la systématisation de période d'exondation mécanique planifiées et d'une durée significative permet d'améliorer les qualités organoleptiques et visuelles des huîtres, contrairement aux idées reçues.

Ce procédé est avantageux car il amène les huîtres à développer, par rapport à des huîtres produites de manière classique sur un site comparable, un taux de remplissage significativement supérieur, avec une chair d'huître qui présente d'importante réserves de glycogène et un muscle adducteur dont la taille et la densité de fibre musculaire sont supérieures, une épaisseur de nacre plus importante, et une coquille plus épaisse.

Dans les exemples décrits ici, les durées des périodes d'exondation mécanique varient entre 12 heures et 24 heures. Plus généralement, les durées des périodes d'exondation mécanique pourront varier entre 3 heures et 48 heures en fonction des caractéristiques huîtres et du site d'élevage. Dans les exemples décrits ici, la durée des périodes d'immersion entre deux périodes d'exondation mécanique est comprise entre un jour et sept jours. Plus généralement, la durée des périodes d'immersion entre deux périodes d'exondation mécanique est comprise entre 3 heures et sept jours.

En fonction des lieux de culture, du climat, et de la gamme d'huître recherchée, il convient de faire varier les paramètres suivants :
- la durée des périodes d'exondation mécanique,
- la durée des périodes d'immersion entre deux périodes d'exondation mécanique,
- la durée totale de l'étape d'élevage,
- le nombre de sous-étapes dans l'étape d'élevage et leur ordre d'exécution.

Il est précisé que le fait qu'un nombre limité de périodes d'immersion ou d'exondation mécaniques puissent présenter une durée hors des plages des revendications ci-après ne saurait suffire à sortir de la portée de celles-ci.

## Revendications

1. Procédé d'ostréiculture, comprenant au moins une étape d'élevage comprenant une alternance de périodes d'immersion et de périodes d'exondation mécanique d'huîtres, dans lequel procédé les périodes d'exondation mécanique présentent une durée comprise entre 3 heures et 48 heures, et en ce que la durée d'une période d'immersion entre deux périodes d'exondation mécanique est comprise entre 3 heures et sept jours,
ledit procédé étant **caractérisé en ce que** ladite étape d'élevage (200) est postérieure à une étape de pré-grossissement (100) qui est réalisée jusqu'à ce que les huîtres présentent une taille comprise entre environ 15mm et 80mm.

2. Procédé selon la revendication 1, dans lequel la durée des périodes d'exondation mécanique est comprise entre 12 heures et 24 heures.

3. Procédé selon la revendication 1 ou 2, dans lequel la durée d'une période d'immersion entre deux périodes d'exondation mécanique est comprise entre un jour et sept jours.

4. Procédé selon l'une des revendications précédentes, dans lequel l'étape d'élevage comprend une succession de sous-étapes (220-280), s'étalant sur une durée totale comprise entre environ dix mois et quarante-huit mois, et dans chacune desquelles la durée d'une période d'immersion entre deux périodes d'exondation mécanique est adaptée au climat du lieu de culture.

5. Procédé selon la revendication 4, dans lequel lorsque, le climat du lieu de culture est un climat méditerranéen, la durée d'une période d'immersion entre deux périodes d'exondation mécanique de chaque sous-étape est choisie comme suit :
a. pour une première sous-étape (220), entre quatre jours et sept jours, puis
b. pour une deuxième sous-étape (240), entre trois jours et cinq jours, puis
c. pour une troisième sous-étape (260), entre un jour et trois jours, puis
d. pour une quatrième sous-étape (280), entre trois jours et quatre jours.

6. Procédé selon la revendication 4 ou 5, dans lequel les sous-étapes sont répétées dans le même ordre.

7. Procédé selon l'une des revendications précédentes, dans lequel l'étape d'élevage (200) est réalisée pendant une durée totale comprise entre dix mois et dix-huit mois.

8. Procédé selon l'une des revendications précédentes, dans lequel la durée d'une période d'immersion entre deux périodes d'exondation mécanique est prolongée lorsque l'une ou plusieurs des conditions suivantes est remplie :
- temps de pluie et/ou de tempête,
- vent supérieur à 30 nœuds,
- ensoleillement inférieur à 20%.

9. Procédé selon l'une des revendications précédentes, dans lequel une étape d'affinage (300) est réalisée après l'étape d'élevage (200), dans laquelle des périodes d'immersion sont réalisées de sorte que les huîtres soient situées à une profondeur comprise entre 10cm et 30cm par rapport à la surface.

## Patentansprüche

1. Austernzuchtverfahren, umfassend mindestens einen Aufzuchtschritt, umfassend einen Wechsel von Eintauchzeiträumen und Zeiträumen mechanischer Entwässerung von Austern, wobei in dem Verfahren die Zeiträume mechanischer Entwässerung eine Dauer im Bereich zwischen 3 Stunden und 48 Stunden aufweisen und worin die Dauer eines Eintauchzeitraums zwischen zwei Zeiträumen mechanischer Entwässerung im Bereich zwischen 3 Stunden und sieben Tagen liegt, wobei das Verfahren **dadurch gekennzeichnet ist, dass** der Aufzuchtschritt (200) nach einem Vormastschritt (100) stattfindet, der durchgeführt wird, bis die Austern eine Größe im Bereich zwischen etwa 15 mm und 80 mm aufweisen.

2. Verfahren nach Anspruch 1, wobei die Dauer der Zeiträume mechanischer Entwässerung im Bereich zwischen 12 Stunden und 24 Stunden liegt.

3. Verfahren nach Anspruch 1 oder 2, wobei die Dauer eines Eintauchzeitraums zwischen zwei Zeiträumen mechanischer Entwässerung im Bereich zwischen einem und sieben Tagen liegt.

4. Verfahren nach einem der vorstehenden Ansprüche, wobei der Aufzuchtschritt eine Abfolge von Unterschritten (220-280) umfasst, die sich über eine Gesamtdauer im Bereich zwischen etwa zehn Monaten und achtundvierzig Monaten erstreckt, und in jedem davon die Dauer eines Eintauchzeitraums zwischen zwei Zeiträumen mechanischer Entwässerung an das Klima des Kulturorts angepasst ist.

5. Verfahren nach Anspruch 4, wobei, wenn das Klima am Kulturort ein Mittelmeerklima ist, die Dauer eines Eintauchzeitraums zwischen zwei Zeiträumen mechanischer Entwässerung jedes Unterschritts wie folgt gewählt wird:
a. für einen ersten Unterschritt (220) zwischen vier Tage und sieben Tage, danach
b. für einen zweiten Unterschritt (240) zwischen drei Tage und fünf Tage, danach
c. für einen dritten Unterschritt (260) zwischen einem Tag und drei Tage, danach
d. für einen vierten Unterschritt (280) zwischen drei Tage und vier Tage.

6. Verfahren nach Anspruch 4 oder 5, wobei die Unterschritte in der gleichen Reihenfolge wiederholt werden.

7. Verfahren nach einem der vorstehenden Ansprüche, wobei der Aufzuchtschritt (200) während einer Gesamtdauer im Bereich zwischen zehn Monaten und achtzehn Monaten durchgeführt wird.

8. Verfahren nach einem der vorstehenden Ansprüche, wobei die Dauer eines Eintauchzeitraums zwischen zwei Zeiträumen mechanischer Entwässerung verlängert wird, wenn eine oder mehrere von folgenden Bedingungen erfüllt ist:
- Wetter mit Regen und/oder Sturm,
- Wind von mehr als 30 Knoten,
- Sonneneinstrahlung von weniger als 20 %.

9. Verfahren nach einem der vorstehenden Ansprüche, wobei nach dem Aufzuchtschritt (200) ein Reifungsschritt (300) durchgeführt wird, in dem die Eintauchzeiträume so durchgeführt werden, dass die Austern sich bezüglich der Oberfläche in einer Tiefe im Bereich zwischen 10 cm und 30 cm befinden.

## Claims

1. An oyster farming method, comprising at least one cultivation step comprising alternating periods of immersion and periods of mechanical dewatering of oysters, in which method the periods of mechanical dewatering last between 3 hours and 48 hours, and in that a period of immersion between two periods of mechanical dewatering lasts between 3 hours and seven days, said method being characterized said cultivation step (200) is subsequent to a preliminary maturation step (100) which is performed until the oysters have a size of between approximatively 15 mm and 80 mm.

2. The method as claimed in claim 1, wherein the periods of mechanical dewatering last between 12 hours and 24 hours.

3. The method as claimed in claim 1 or 2, wherein a period of immersion between two periods of mechanical dewatering lasts between one day and seven days.

4. The method as claimed in one of the preceding claims, wherein the cultivation step comprises a succession of substeps (220-280) lasting a total of between approximately ten months and forty-eight months, and in each of which the duration of a period of immersion between two periods of mechanical dewatering is adapted to the climate of the place of cultivation.

5. The method as claimed in claim 4, wherein, when the climate of the place of cultivation is a Mediterranean climate, the duration of a period of immersion between two periods of mechanical dewatering of each substep is chosen as follows:
a. for a first substep (220), between four days and seven days, then
b. for a second substep (240), between three days and five days, then
c. for a third substep (260), between one day and three days, then
d. for a fourth substep (280), between three days and four days.

6. The method as claimed in claim 4 or 5, wherein the substeps are repeated in the same order.

7. The method as claimed in one of the preceding claims, wherein the cultivation step (200) takes place over a total period of between ten months and eighteen months.

8. The method as claimed in one of the preceding claims, wherein the duration of a period of immersion between two periods of mechanical dewatering is extended when one or more of the following conditions is or are met:
- rain and/or storm,
- wind above 30 knots,
- below 20% sunshine.

9. The method as claimed in one of the preceding claims, wherein a refining step (300) takes place after the cultivation step (200), wherein periods of immersion take place such that the oysters are located at a depth of between 10 cm and 30 cm below the surface.
